# EUROPEAN PATENT SPECIFICATION

(11) **EP 2 264 514 B1**
(45) Date of publication and mention of the grant of the patent: **01.05.2013**
(21) Application number: 10165909.2
(22) Date of filing: 15.06.2010
(51) Int. Cl.: G02F 1/13

(54) **Liquid crystal module**
Flüssigkristallmodul
Module à cristaux liquides

(30) Priority: 18.06.2009 JP 2009145520
(43) Date of publication of application: 22.12.2010
(73) Proprietor: Funai Electric Co., Ltd., Daito-shi, Osaka 574-0013 (JP)
(72) Inventor: Sakuma, Kota, Osaka 574-0013 (JP)
(74) Representative: Grünecker, Kinkeldey, Stockmair & Schwanhäusser

(56) References cited:
- JP-A- 2006 350 218
- US-A1- 2005 168 954
- US-A1- 2008 297 681

## Description

### BACKGROUND

The present invention relates to a liquid crystal module installed in an electronic appliance such as a television, a personal computer, or the like, and more particularly to a liquid crystal module which is modified to prevent a liquid crystal panel from being damaged at a connection portion of a bezel constituting frame member.

Such a liquid crystal module is known from US 2005/168954 A1, which corresponds to the preamble of claim 1.

In order to save on sheet metal material and reduce costs, related-art liquid crystal module includes a bezel which is made of sheet metal and is divided into two upper and lower bezel constituting frame members and two left and right bezel constituting frame members, and four edge portions of a liquid crystal panel are enclosed by the bezels which are connected to each other in the shape of a rectangular frame.

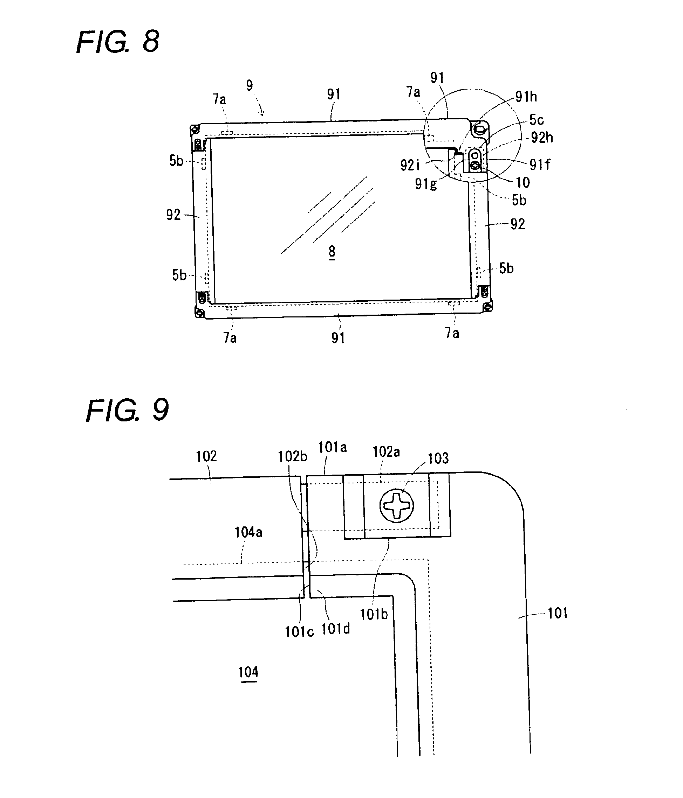

The connection portions between the upper and lower bezel constituting frame members and the left and right bezel constituting frame members in the liquid crystal module have, for example, a connection structure shown in Fig. 9. That is, both end portions of the left and right bezel constituting frame members 101 are provided with protruding end portions 101a for connection which protrude inwardly at a right angle, and protruding pieces 102a for connection which protrude from both end portions of the upper and lower bezel constituting frame members 102 are overlapped with the lower side of the concave portions 101b of the protruding end portion 101a for connection. The protruding end portions 101a and the protruding pieces 102a are connected to each other by screws 103 and fixed to a rear frame (not shown).

Patent Document I discloses the connection of the bezel constituting frame members, in which two longitudinal support frames and two widthwise support frames which constitute the bezel are overlapped with at both end portions whereof and are fixed to each other by screws. Patent Document 2 discloses a configuration in which first and second 1.-shaped members which are divided at two diagonal corners from a bezel arc provided with protruding pieces at both end portions thereof, and the protruding pieces are overlapped with each other and are fixed by screws. Patent Document 3 discloses a configuration in which upper and lower bezel constituting frame members arc respectively provided with two protruding pieces for connection at both end portions thereof, and the protruding pieces for connection are overlapped with left and right bezel constituting frame members which are formed in a U-shape along a longitudinal direction and are fixed, by screws.

Patent Document 1: JP-A-2007-304279

Patent Document 2: JP-A-2007-17835

Patent Document 3: JP-A-2006-330271

However, in the related-art connection structure of the bezel constituting frame members shown in Fig. 9, when a front end surface 101c c of a protruding end portion 101a a for connection of a bezel constituting frame member 101 and both end surfaces 102c of a bezel constituting frame member 102 are partially overlapped with an end edge portion 104a of a liquid crystal panel 104, and the protruding end portion 101a is fixedly connected to a protruding piece 102a for connection by a screw 103, a force is applied inwardly to the left and right bezel constituting frame members 101 in a falling direction. In this instance, an inner angular portion 101 d of a front end of the protruding end portion 101a for connection may come into contact with the end edge portion 104a of the liquid crystal panel 104. In a case where a burr is formed at the time of die-cutting the front end surface 101c of the protruding end portion 101a for connection, there is a problem in that the end edge portion 104a of the liquid crystal panel 104 is damaged by the burr.

As one solution to this problem, it will be considered that a small cushion member is interposed between the inner angular portion 101d of the front end of the protruding end portion 101a for connection and the edge portion 104a of the end portion of the liquid crystal panel 104. In this instance, however, there is another problem in that the component cost is increased, and the number of components and the number of assembling steps are increased, which leads to increased cost.

The above-mentioned problem, in which the end edge portion 104a of the liquid crystal panel 104 is damaged, also occurs even in the connection structure disclosed in Patent Document 3 if the burr is formed at the die-cut end surfaces of both end portions of the upper and lower bezel constituting frame members and the left and right bezel constituting frame members of the U-shape along a longitudinal direction.

In this instance, although the above-mentioned problem does not occur in the connection structures disclosed in Patent Documents 1 and 2, the techniques disclosed in Patent Documents 1 and 2 cannot be applied to the case where the left and right bezel constituting frame members are provided with the protruding end portions for connection which protrude inwardly at a right angle from both end portions, and are not useful for solving the problem.

### SUMMARY

It is therefore an object of at least one embodiment of the present invention to provide a liquid cystal module which is modified to prevent an end edge portion of a liquid crystal panel from being damaged at a connection portion of a bezel constituting frame member.

In order to achieve the above described object, according to a first aspect of at least one embodiment of the present invention, there is provided a liquid crystal module, comprising: a liquid crystal panel; and a bezel including an upper frame, a lower frame, a left frame and a right frame which are connected to each other in the shape of a rectangular frame and enclosing four peripheral edges of the liquid crystal panel.
wherein each of the left and right frames is formed substantially into a U-shape having a straight portion extending parallel to left and right edges of the liquid crystal panel and protruding end portions protruding inwardly at a right angle from both ends of the straight portion, as viewed from above,
wherein each of the upper and lower frames is formed substantially into an I-shape having a straight portion extending parallel to upper and lower edges of the liquid crystal panel, as viewed from above,
wherein the protruding end portions are disposed at positions outwardly offset from the liquid crystal panel so as not to overlap with the liquid crystal panel, as viewed from above,
both ends of the straight portion of each of the upper and lower frames are provided with receiving step portions which receive the protruding end portions and the receiving step portions are disposed at positions outwardly offset from the liquid crystal panel, as viewed from above, and wherein the protruding end portions are overlapped with the receiving step portions as viewed from above, such that both end faces of the upper and lower frames except the receiving step portions are adjacent to inner side faces of the left and right frames and the protruding end portions are fixed to the receiving step portions with screws.

A convex portion may be provided at each of inner corners defined between each of the protruding end portions and the straight portion of each of the left and right frames and the convex portion may be disposed at a position outwardly offset from the liquid crystal panel as viewed from above. A concave portion which corresponds to the convex portion may be provided at each of the both ends of the straight portion of each of the upper and lower frames and the concave portion may be disposed at a position outwardly offset from the liquid crystal panel as viewed from above.

According to a second aspect of at least one embodiment of the present invention, there is provided a liquid crystal module, comprising: a liquid crystal panel; and a bezel including an upper frame, a lower frame, a left frame and a right frame which are connected to each other in the shape of a rectangular frame and enclosing four peripheral edges of the liquid crystal panel, wherein each of the upper and lower frames is formed substantially into a U-shape having a straight portion extending parallel to upper and lower edges of the liquid crystal panel and protruding end portions protruding inwardly at a right angle from both ends of the straight portion, as viewed from above, wherein each of the left and right frames is formed substantially into an I-shape having a straight portion extending parallel to left and right edges of the liquid crystal panel, as viewed from above,
wherein the protruding end portions are disposed at positions outwardly offset from the liquid crystal panel so as not to overlap with the liquid crystal panel, as viewed from above,
both ends of the straight portion of each of the left and right frames are provided with receiving step portions which receive the protruding end portions and the receiving step portions are disposed at positions outwardly offset from the liquid crystal panel, as viewed from above, and
wherein the protruding end portions are overlapped with the receiving step portions as viewed from above, such that both end faces of the left and right frames except the receiving step portions are adjacent to inner side faces of the upper and lower frames and the protruding end portions are fixed to the receiving step portions with screws.

A convex portion may be provided at each of inner corners defined between each of the protruding end portions and the straight portion of each of the upper and lower frames and the convex portion is disposed at a position outwardly offset from the liquid crystal panel as viewed from above, and
wherein a concave portion which corresponds to the convex portion is provided at each of the both ends of the straight portion of each of the left and right frames and the concave portion is disposed at a position outwardly offset from the liquid crystal panel as viewed from above.

With the above described liquid crystal module according to the first aspect, the protruding end portion protruding inwardly at a right angle from each of both ends of the left and right frames is overlapped with the receiving step portion provided at each of both ends of the upper and lower frames. The protruding end portion is fixed to the receiving step portion with a screw. Since the protruding end portion and the receiving step portion are disposed at positions outwardly offset from the liquid crystal panel as viewed from above, an inner edge of the protruding end portion does not come into contact with an outer edge of the liquid crystal panel. Even if a burr is produced in the inner edge of the protruding end portion, the liquid crystal panel is not damaged by this burr.

In addition, with the above described liquid crystal module, the convex portion is provided at each of inner corners defined between the protruding end portion and the left and right frames and the concave portion corresponding to the convex portion is provided at each of the both ends of the upper and lower frames. This convex portion reinforces a neck portion of the protruding end portion of the left and right frames. The convex portion and the concave portion are disposed at positions outwardly offset from the liquid crystal panel as viewed from above. Accordingly, if a force pressing the convex portion is applied to the convex portion when fixing the protruding end portion to the receiving step portion with a screws, the convex portion does not come into contact with the liquid crystal panel. Consequently, even if a burr is produced in an end face of the convex portion due to the die-cutting, the liquid crystal panel is not damaged by the burr.

In addition, since the configuration of the liquid crystal module according to the second aspect is substantially identical to the configuration of the liquid crystal module according to the first aspect, except that the protruding end portion protrudes inwardly at a right angle from both ends of the upper and lower frames and the receiving step portion is provided at each of both ends of the left and right frames, the same effects as the liquid crystal module according to the first aspect can be obtained in the second aspect.

### BRIEF DESCRIPTION OF THE DRAWINGS

In the accompanying drawings:
Fig. 1 is an exploded perspective view illustrating a liquid crystal module according to an embodiment of the present invention;
Fig. 2 is a front view of the liquid crystal module;
Fig. 3 is an enlarged cross-sectional view taken along the line A-A in Fig. 2;
Fig. 4 is an enlarged cross-sectional view taken along the line B-B in Fig. 2;
Fig. 5 is an enlarged view of a portion of the liquid crystal module, indicated by the circle shown in Fig. 2;
Fig. 6 is an exploded front view illustrating a connection portion between an upper-side frame member and a right-side frame member;
Fig. 7 is an exploded perspective view illustrating the connection portion between the upper-side frame member and a right-side frame member;
Fig. 8 is a partially-enlarged front view illustrating a liquid crystal module according to another embodiment of the present invention; and
Fig. 9 is a partial front view illustrating a related-art liquid crystal module.

### DETAILED DESCRIPTION OF THE EMBODIMENTS

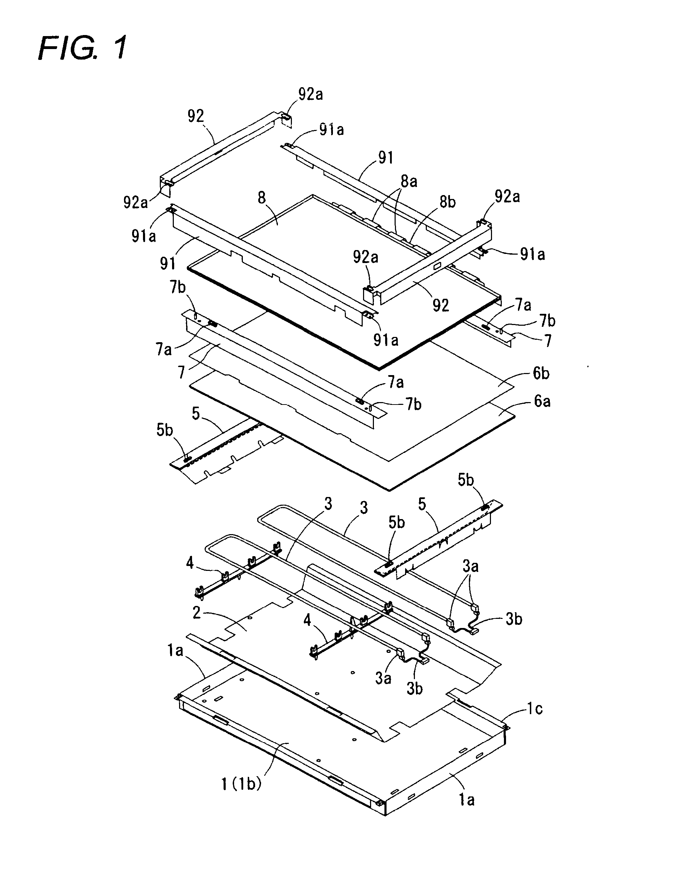

A liquid crystal module shown in Figs. 1 to 5 includes a rear frame 1, a light reflective sheet 2, U-shaped cold cathode tubes 3, lamp holders 4, lamp frames 5, optical sheets 6a and 6b, cell guides 7, a liquid crystal panel 8, a bezel formed by connecting bezel constituting frame members 91 and 92 in a rectangular frame.

The rear frame 1 is a shallow box-type frame made of sheet metal. The light reflective sheet 2 which is bent in a reversed trapezoidal shape is provided inside the rear frame 1. A plurality (two in this embodiment) of U-shaped cold cathode tubes 3 are arranged in parallel with each other on the light reflective sheet 2. U-shaped bent end portions and a center portion of the cold cathode tube 3 are held by the lamp holders 4 and are fixed to a bottom plate 1b of the rear frame 1.

Lamp sockets 3a made of rubber are attached to end portions of the cold cathode tube 3 opposite to the U-shaped bent end portion. The lamp sockets 3a are fixedly fitted into socket fitting holes (not shown) which are provided in a bottom plate 1b of the rear frame 1 along one of left and right side plates 1a (right side plate in this embodiment) of the rear frame 1. A lead wire 3b of the cold cathode tube 3 is drawn out toward a rear side of the rear frame 1. The lamp frames 5 made of synthetic resin are attached inside left and right side plates 1a of the rear frame 1. The lamp frames 5 cover the U-shaped bent end portions and the opposite end portions which is attached to the lamp sockets 3a, of the U-shaped cold cathode tubes 3 in order to prevent variation in brightness.

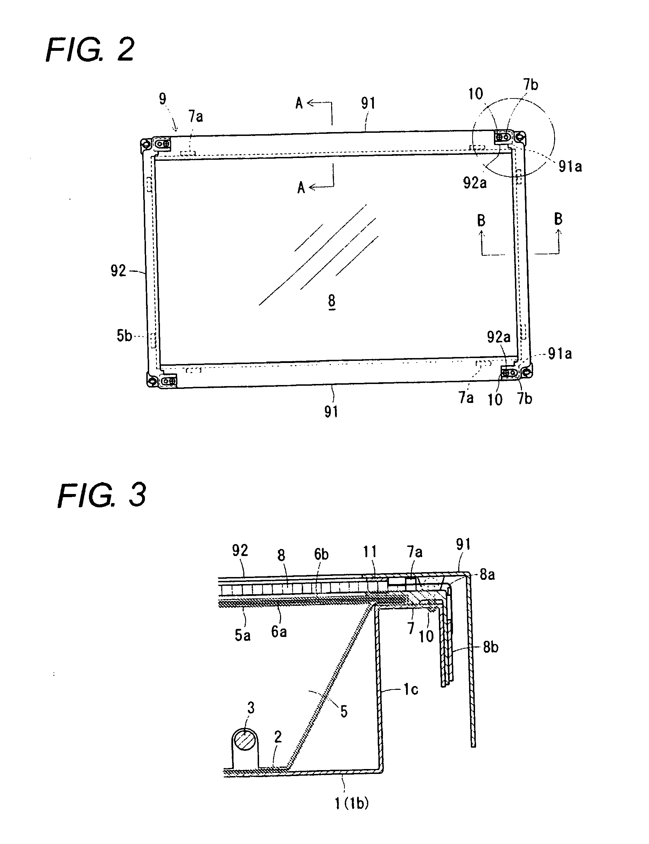

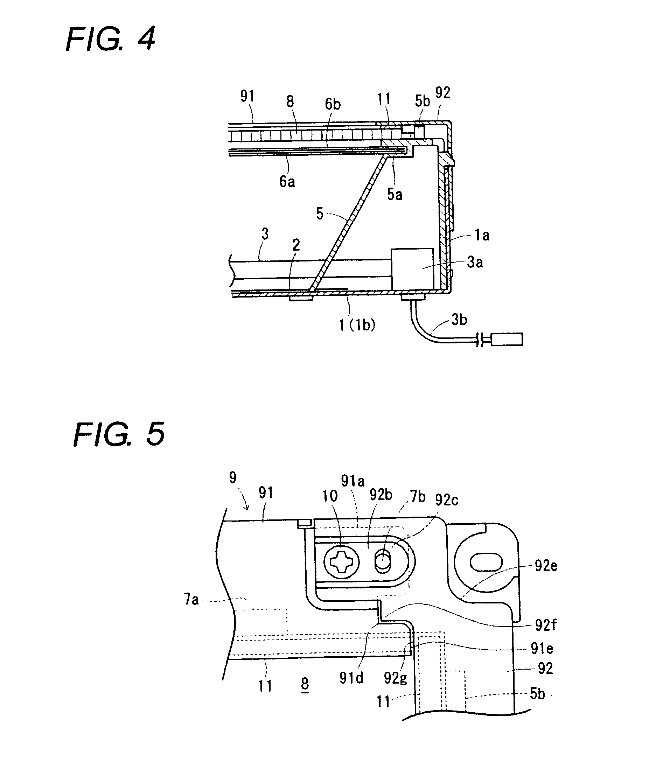

As shown in Figs. 1 and 3, each of the upper and lower side plates 1c of the rear frame 1 is bent in a reversed U-shape to form double side plates, and edge portions (upper and lower edge portions) of two optical sheets 6a and 6b are disposed on the upper surface of the double side plates 1c and are then pressed by the cell guides 7. As shown in Fig. 4, the left and right edge portions of the optical sheets 6a and 6b are inserted into receiving grooves 5a of the lamp frames 5. The optical sheets 6a and 6b are light diffuser sheets which diffuse direct light from the U-shaped cold cathode tubes 3 or reflected light from the light reflective sheet 2 to uniformly irradiate the light onto the liquid crystal panel 8 from a rear side. The upper optical sheet 6b is a thin optical diffuser sheet, and the lower optical sheet 6a is a light diffuser sheet (light diffuser plate) having a thickness which is sufficient to resist bending.

Four edge portions of the liquid crystal panel 8 are disposed on the lamp frames 5 and the cell guides 7. The liquid crystal panel 8 is positioned by positioning bosses 5b and 7a formed on the upper surface of the lamp frames 5 and the cell guides 7, respectively, as shown in Figs. 1 to 4, so as not to move the liquid crystal panel 8 in upward and rearward direction and in left and right direction. As shown in Figs. 1 and 3, an X-wiring board 8b is connected to the edge portion (upper end edge) of the liquid crystal panel 8, with a chip-on film 8a being interposed therebetween, and the X-wiring board 8b is attached to the side surface of the cell guide 7.

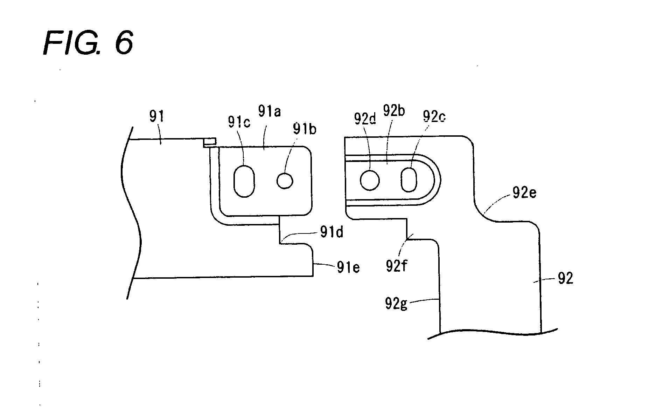

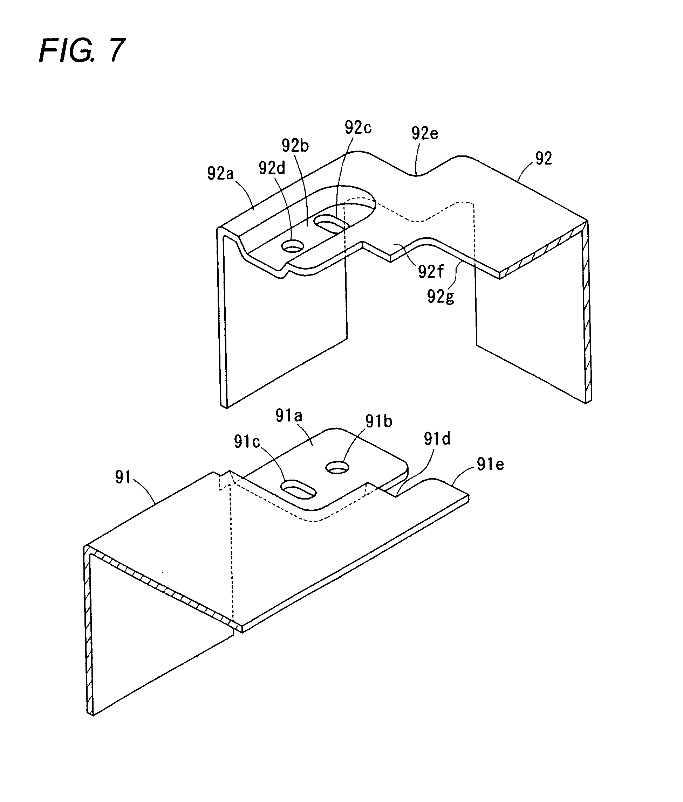

Four edge portions of the liquid crystal panel 8 are enclosed by the bezel 9 as shown in Fig. 2. The bezel 9 includes two upper and lower long bezel constituting frame members 91 and two left and right short bezel constituting frame members 92 which are made of sheet metal and are connected to each other in the shape of a rectangular frame. As shown in Figs. 2, and 5 to 7, the left and right bezel constituting frame members 92 are provided with protruding end portions 92a for connection. The protruding end portions 92a protrude inwardly at a right angle from both end portions of the left and right bezel constituting frame members 92 and are disposed at positions outwardly offset from the liquid crystal panel 8 as viewed from above. Concave portions 92b formed in the upper surfaces of the protruding end portions 92a are provided with a pin inserting hole 92c and a screw inserting hole 92d.

Since a recessed portion 92e is provided in each outer corner defined between the bezel constituting frame member 92 and the protruding end portion 92a which protrudes at a right angle from one end portion of the bezel constituting frame member 92, it is desirable to strengthen a neck portion of the protruding end portion 92a. Accordingly, a convex portion 92f is provided in each inner corner defined between the bezel constituting frame member 92 and the protruding end portion 92a to reinforce the neck portion.

Both end portions of the upper and lower bezel constituting frame members 91 are provided with receiving step portions 91a which receive the concave portions 92b of the protruding end portions 92a. The receiving step portion 91a is formed such that the receiving step portion 91a is formed lower than the other portion of the upper surface of the upper and lower bezel constituting frame members 91. The receiving step portions 91a are disposed at positions offset outwardly from the liquid crystal panel 8 as viewed from above. The receiving step portion 91a is provided with a pin inserting hole 91b and a screw inserting hole 91c. A concave portion 91d is formed at both end portions of the bezel constituting frame member 91 at a position other than the receiving step portion 91a. The concave portion 91d corresponds to the convex portion 92f and receives the convex portion 92f.

The upper and lower bezel constituting frame members 91 and the left and right bezel constituting frame members 92 are fixedly connected to each other in the following manner. That is, the concave portions 92b of the protruding end portions 92a of the left and right bezel constituting frame members 92 are overlapped with the receiving step portions 91a of the upper and lower bezel constituting frame members 91. Both end surfaces 91e of the bezel constituting frame member 91 except for the receiving step portion 91a are adjacent to an inner end surface 92g of the bezel constituting frame member 92, and simultaneously, the convex portion 92f is engaged with the concave portion 91d. Then, in a state in which the positioning pin 7b (refer to Figs. 1, 2 and 5) protruding upward from the cell guide 7 is inserted into the pin inserting holes 91b and 92c from below to position the bezel constituting frames 91 and 92, the screw 10 (refer to Figs. 2, 3 and 5) is inserted into the screw inserting holes 92d and 91c and a screw inserting hole (not shown) of the cell guide 7, so that a screw hole (not shown) formed in the upper surface of the double side plates 1c of the rear frame 1 is fastened to connect the bezel constituting frame members 91 and 92 and simultaneously fix them to the rear frame 1. In this instance, when the bezel constituting frame members 91 and 92 are connected to each other and are fixed to the rear frame, as shown in Figs. 3 to 5, a cushion material 11 of an elongated band shape is interposed between four edge portions of the liquid crystal panel 8 and inner edge portions of the bezel constituting frame members 91 and 92.

As described above, four edge portions of the liquid crystal panel 8 are enclosed by the bezel 9 including two upper and lower bezel constituting frame members 91 and two left and right bezel constituting frame members 92 which are connected to each other in the shape of a rectangular frame. The protruding end portions 92a protruding inwardly at a right angle from both end portions of the left and right bezel constituting frame members 92 are disposed at positions outwardly offset from the liquid crystal panel 8 as viewed from above. The receiving step portions 91a provided at both end portions of the upper and lower bezel constituting frame members 91 are disposed at positions outwardly offset from the liquid crystal panel as viewed from above. And the protruding end portions 92a are overlapped with the receiving step portions 91a and then are fixed to the receiving step portions 91a with the screw 10. Therefore, there is no concern that the inner edge of the front end portion of the protruding end portion 92a overlaps with and comes into contact with the edge portion of the liquid crystal panel 8. In addition, the convex portions 92f provided at the inner corners of the left and right bezel constituting frame members 92 and the convex portions 91d provided at both end portions of the upper and lower bezel constituting frame members 91 are disposed at positions outwardly offset from the liquid crystal panel 8 as viewed from above. Even in a case where the force pressing the convex portion 92f inwardly is applied to the convex portion 92f when the projection end portion 92a is fixed with the screw, the convex portion 92f does not come into contact with the edge portion of the liquid crystal panel 8. Consequently, even if a burr is produced in an end face of the protruding end portion 92a at the time of die-cutting or the end surface of the convex portion 92f, it is possible to solve the problem of the edge portion of the liquid crystal panel 8 being damaged by the burr.

In this instance, the convex portion 92f for reinforcement and the concave portion 91a corresponding to the outer corner portion 92f may be optional.

Fig. 8 is a partially enlarged front view illustrating the liquid crystal module according to another embodiment of the invention. In the bezel 9 enclosing four edge portions of the liquid crystal panel 8, protruding end portions 91f for connection protruding inwardly at a right angle from both end portions of the upper and lower bezel constituting frame members 91 are disposed at positions outwardly offset from the liquid crystal panel 8 as viewed from above, and a concave portion 91g of the protruding end portion 91f is provided with a pin inserting hole and a screw inserting hole. Receiving step portions 92h for receiving the protruding end portions 91f are provided at both end portions of the left and right bezel constituting frame members 92 and disposed at positions outwardly offset from the liquid crystal panel 8 as viewed from above. The receiving step portions 92h are provided with a pin inserting hole and a screw inserting hole. In addition, convex portions 91h for reinforcement are provided at inner corners defined between the protruding end portions 91f and the upper and lower bezel constituting frame members 91. The convex portions 91h h are disposed at positions outwardly offset from the liquid crystal panel 8 as viewed from above. Concave portions 92i corresponding to the convex portions 91h are provided at both end portions of the left and right bezel constituting frame member 92 for receiving the convex portions 91h.

The upper and lower bezel constituting frame members 91 and the left and right bezel constituting frame members 92 are fixedly connected to each other in the following manner. That is, the protruding end portions 91 f for connection of the upper and lower bezel constituting frame members 91 are overlapped with the receiving step portions 92h of the left and right bezel constituting frame members 92. Both end surfaces of the bezel constituting frame member 92 except for the receiving step portion 92h are adjacent to the inner end surface of the bezel constituting frame member 91, and simultaneously, the convex portion 91h is engaged with the concave portion 92i. Then, in a state in which the positioning pin 5c protruding upward from the lamp frame 5 is inserted into the pin inserting holes from below to position the bezel constituting frames 91 and 92, the screw 10 (refer to Figs. 2, 3 and 5) is inserted into the screw inserting hole (or the screw hole of the rear frame) formed in the upper surface of the lamp frame 5 from the screw inserting hole.

Since other configuration of the liquid crystal module is identical to that of the above-described liquid crystal module, the description thereof will be omitted. In this instance, in the liquid crystal module, the convex portion 91h h for reinforcement and the concave portion 92i for receiving the convex portion 91h may be optional.

Since the liquid crystal module is substantially identical to the above-described liquid crystal module except that the both end portions of the upper and lower bezel constituting frame members 91 are provided with the protruding end portions 91f for connection and both end portions of the left and right bezel constituting frame members 92 are provided with receiving step portions 92, and the connection and fixing configuration itself is substantially identical to the above-described liquid crystal module, the liquid crystal module in another embodiment has the same effect as that of the above-described liquid crystal module.

## Claims

1. A liquid crystal module, comprising:
a liquid crystal panel (8); and
a bezel including an upper frame (91), a lower frame (91), a left frame (92) and a right frame (92) which are connected to each other in the shape of a rectangular frame and enclosing four peripheral edges of the liquid crystal panel (8),
wherein each of the left and right frames (92) is formed substantially into a U-shape having a straight portion extending parallel to left and right edges of the liquid crystal panel (8) and protruding end portions (92a) protruding inwardly at a right angle from both ends of the straight portion, as viewed from above,
wherein each of the upper and lower frames (91) is formed substantially into an I-shape having a straight portion extending parallel to upper and lower edges of the liquid crystal panel (8), as viewed from above,
**characterized in that**
the protruding end portions (92a) are disposed at positions outwardly offset from the liquid crystal panel (8) so as not to overlap with the liquid crystal panel (8), as viewed from above,
both ends of the straight portion of each of the upper and lower frames (91) are provided with receiving step portions (91 a) which receive the protruding end portions (92a) and the receiving step portions (91 a) are disposed at positions outwardly offset from the liquid crystal panel (8), as viewed from above, and
wherein the protruding end portions (92a) are overlapped with the receiving step portions (91 a) as viewed from above, such that both end faces (91e) of the upper and lower frames (91) except the receiving step portions (91a) are adjacent to inner side faces (92g) of the left and right frames (92) and the protruding end portions (92a) are fixed to the receiving step portions (91 a) with screws (10).

2. The liquid crystal module as set forth in claim 1,
wherein a convex portion (92f) is provided at each of inner corners defined between each of the protruding end portions (91 a) and the straight portion of each of the left and right frames (92) and the convex portion (92f) is disposed at a position outwardly offset from the liquid crystal panel (8) as viewed from above, and
wherein a concave portion (91d) which corresponds to the convex portion (92f) is provided at each of the both ends of the straight portion of each of the upper and lower frames (91) and the concave portion (91d) is disposed at a position outwardly offset from the liquid crystal panel (8) as viewed from above.

3. A liquid crystal module, comprising:
a liquid crystal panel (8); and
a bezel including an upper frame (91), a lower frame (91), a left frame (92) and a right frame (92) which are connected to each other in the shape of a rectangular frame and enclosing four peripheral edges of the liquid crystal panel (8),
wherein each of the upper and lower frames (91) is formed substantially into a U-shape having a straight portion extending parallel to upper and lower edges of the liquid crystal panel (8) and protruding end portions (91f) protruding inwardly at a right angle from both ends of the straight portion, as viewed from above,
wherein each of the left and right frames (92) is formed substantially into an I-shape having a straight portion extending parallel to left and right edges of the liquid crystal panel (8), as viewed from above,
**characterized in that**
the protruding end portions (91f) are disposed at positions outwardly offset from the liquid crystal panel (8) so as not to overlap with the liquid crystal panel (8), as viewed from above,
both ends of the straight portion of each of the left and right frames (92) are provided with receiving step portions (92h) which receive the protruding end portions (91f) and the receiving step portions (92h) are disposed at positions outwardly offset from the liquid crystal panel (8), as viewed from above, and
wherein the protruding end portions (91f) are overlapped with the receiving step portions (92h) as viewed from above, such that both end faces of the left and right frames (92) except the receiving step portions (92h) are adjacent to inner side faces of the upper and lower frames (91) and the protruding end portions (91f) are fixed to the receiving step portions (92h) with screws (10).

4. The liquid crystal module as set forth in claim 3,
wherein a convex portion (91 h) is provided at each of inner corners defined between each of the protruding end portions (91f) and the straight portion of each of the upper and lower frames (91) and the convex portion (91 h) is disposed at a position outwardly offset from the liquid crystal panel (8) as viewed from above, and
wherein a concave portion (92i) which corresponds to the convex portion (91h) is provided at each of the both ends of the straight portion of each of the left and right frames (92) and the concave portion (92i) is disposed at a position outwardly offset from the liquid crystal panel (8) as viewed from above.

## Patentansprüche

1. Flüssigkristallmodul, das umfasst:
ein Flüssigkristallpaneel (8), und
eine Einfassung einschließlich eines oberen Rahmens (91), eines unteren Rahmens (91), eines linken Rahmens (92) und eines rechten Rahmens (92), die miteinander in der Form eines rechteckigen Rahmens verbunden sind und vier Umfangskanten des Flüssigkristallpaneels (8) einschließen,
wobei jeder der linken und rechten Rahmen (92) von oben betrachtet im Wesentlichen U-förmig ausgebildet ist und einen geraden Teil, der sich parallel zu linken und rechten Kanten des Flüssigkristallpaneels (8) erstreckt, und vorstehende Endteile (92a), die mit einem rechten Winkel von beiden Enden des geraden Teils nach innen vorstehen, aufweist,
wobei jeder der oberen und unteren Rahmen (91) von oben betrachtet im Wesentlichen I-förmig ausgebildet ist und einen geraden Teil, der sich parallel zu oberen und unteren Kanten des Flüssigkristallpaneels (8) erstreckt, aufweist,
**dadurch gekennzeichnet, dass**
die vorstehenden Endteile (92a) von oben betrachtet an von dem Flüssigkristallpaneel (8) nach außen versetzten Positionen angeordnet sind, sodass sie nicht mit dem Flüssigkristallpaneel (8) überlappen,
beide Enden des geraden Teils jedes der oberen und unteren Rahmen (91) mit Aufnahmestufenteilen (91 a) versehen sind, die die vorstehenden Endteile (92a) aufnehmen, wobei die Aufnahmestufenteile (91 a) von oben betrachtet an von dem Flüssigkristallpaneel (8) nach außen versetzten Positionen angeordnet sind, und
die vorstehenden Endteile (92a) von oben betrachtet mit den Aufnahmestufenteilen (91a) überlappen, sodass beide Endflächen (91e) der oberen und unteren Rahmen (91) mit Ausnahme der Aufnahmestufenteile (91 a) Innenseitenflächen (92g) der linken und rechten Rahmen (92) benachbart sind, und die vorstehenden Endteile (92a) durch Schrauben (10) an den Aufnahmestufenteilen (91 a) fixiert sind.

2. Flüssigkristallmodul nach Anspruch 1, wobei:
ein konvexer Teil (92f) an jeder der inneren Ecken zwischen jedem der vorstehenden Endteile (91a) und dem geraden Teil jedes der linken und rechten Rahmen (92) vorgesehen ist, wobei der konvexe Teil (92f) von oben betrachtet an einer von dem Flüssigkristallpaneel (8) nach außen versetzten Position angeordnet ist, und
ein konkaver Teil (91d), der dem konvexen Teil (92f) entspricht, an jedem der beiden Enden des geraden Teils jedes der oberen und unteren Rahmen (91) vorgesehen ist, wobei der konkave Teil (91 d) von oben betrachtet an einer von dem Flüssigkristallpaneel (8) nach außen versetzten Position angeordnet ist.

3. Flüssigkristallmodul, das umfasst:
ein Flüssigkristallpaneel (8), und
eine Einfassung einschließlich eines oberen Rahmens (91), eines unteren Rahmens (91), eines linken Rahmens (92) und eines rechten Rahmens (92), die miteinander in der Form eines rechteckigen Rahmens verbunden sind und vier Umfangskanten des Flüssigkristallpaneels (8) einschließen,
wobei jeder der oberen und unteren Rahmen (91) von oben betrachtet im Wesentlichen U-förmig ausgebildet ist und einen geraden Teil, der sich parallel zu oberen und unteren Kanten des Flüssigkristallpaneels (8) erstreckt, und vorstehende Endteile (91f), die mit einem rechten Winkel von beiden Enden des geraden Teils nach innen vorstehen, aufweist,
wobei jeder der linken und rechten Rahmen (92) von oben betrachtet im Wesentlichen I-förmig ausgebildet ist und einen geraden Teil, der sich parallel zu linken und rechten Kanten des Flüssigkristallpaneels (8) erstreckt, aufweist,
**dadurch gekennzeichnet, dass**
die vorstehenden Endteile (91f) von oben betrachtet an von dem Flüssigkristallpaneel (8) nach außen versetzten Positionen angeordnet sind, sodass sie nicht mit dem Flüssigkristallpaneel (8) überlappen,
beide Enden des geraden Teils jedes der linken und rechten Rahmen (92) mit Aufnahmestufenteilen (92h) versehen sind, die die vorstehenden Endteile (91f) aufnehmen, wobei die Aufnahmestufenteile (92h) von oben betrachtet an von dem Flüssigkristallpaneel (8) nach außen versetzten Positionen angeordnet sind, und
die vorstehenden Endteile (91f) von oben betrachtet mit den Aufnahmestufenteilen (92h) überlappen, sodass beide Endflächen der linken und rechten Rahmen (92) mit Ausnahme der Aufnahmestufenteile (92h) Innenseitenflächen der oberen und unteren Rahmen (91) benachbart sind, und die vorstehenden Endteile (91f) durch Schrauben (10) an den Aufnahmestufenteilen (92h) fixiert sind.

4. Flüssigkristallmodul nach Anspruch 3, wobei:
ein konvexer Teil (91 h) an jeder der inneren Ecken zwischen jedem der vorstehenden Endteile (91f) und dem geraden Teil jedes der oberen und unteren Rahmen (91) vorgesehen ist, wobei der konvexe Teil (91h) von oben betrachtet an einer von dem Flüssigkristallpaneel (8) nach außen versetzten Position angeordnet ist, und
ein konkaver Teil (92i), der dem konvexen Teil (91 h) entspricht, an jedem der beiden Enden des geraden Teils jedes der linken und rechten Rahmen (92) vorgesehen ist, wobei der konkave Teil (92i) von oben betrachtet an einer von dem Flüssigkristallpaneel (8) nach außen versetzten Position angeordnet ist.

## Revendications

1. Module à cristaux liquides, comprenant :
un panneau à cristaux liquides (8) ; et
un panneau avant comprenant un cadre supérieur (91), un cadre inférieur (91), un cadre gauche (92) et un cadre droit (92) qui sont raccordés mutuellement sous la forme d'un cadre rectangulaire et entourant quatre bords périphériques du panneau à cristaux liquides (8),
chacun des cadres gauche et droit (92) étant formé sensiblement en forme de U ayant une partie rectiligne s'étendant parallèlement aux bords gauche et droit du panneau à cristaux liquides (8) et des parties d'extrémité saillantes (92a) faisant saillie vers l'intérieur à un angle droit par rapport aux deux extrémités de la partie rectiligne, telles que vues de dessus,
chacun des cadres supérieur et inférieur (91) étant formé sensiblement en forme de 1 ayant une partie rectiligne s'étendant parallèlement aux bords supérieur et inférieur du panneau à cristaux liquides (8), tels que vus de dessus,
**caractérisé en ce que**
les parties d'extrémité saillantes (92a) sont disposées à des positions décalées vers l'extérieur depuis le panneau à cristaux liquides (8) de manière à ne pas se chevaucher avec le panneau à cristaux liquides (8), tel que vu de dessus,
Les deux extrémités de la partie rectiligne de chacun des cadres supérieur et inférieur (91) sont pourvues de parties de réception à gradin (91a) qui reçoivent les parties d'extrémité saillantes (92a) et les parties de réception à gradin (91a) sont disposées à des positions décalées vers l'extérieur par rapport au panneau à cristaux liquides (8), tel que vu de dessus, et
les parties d'extrémité saillantes (92a) chevauchant mutuellement les parties de réception à gradin (91a) telles que vues de dessus, de sorte que les deux faces d'extrémité (91e) des cadres supérieur et inférieur (91) à l'exception des parties de réception à gradin (91a) soient adjacentes aux faces latérales internes (92g) des cadres gauche et droit (92) et les parties d'extrémité saillantes (92a) sont fixées aux parties de réception à gradin (91a) avec des vis (10).

2. Module à cristaux liquides tel que décrit dans la revendication 1, dans lequel une partie convexe (92f) est disposée à chacun des coins internes définis entre chacune des parties d'extrémité saillantes (91a) et la partie rectiligne de chacun des cadres gauche et droit (92) et la partie convexe (92f) est disposé à une position décalée vers l'extérieur par rapport au panneau à cristaux liquides (8) tel que vu de dessus, et
une partie concave (91d) qui correspond à la partie convexe (92f) étant disposée à chacune des deux extrémités de la partie rectiligne de chacun des cadres supérieur et inférieur (91) et la partie concave (91d) étant disposée à une position décalée vers l'extérieur par rapport au panneau à cristaux liquides (8) tel que vu de dessus.

3. Module à cristaux liquides, comprenant :
un panneau à cristaux liquides (8) ; et
un panneau avant comprenant un cadre supérieur (91), un cadre inférieur (91), un cadre gauche (92) et un cadre droit (92) qui sont raccordés mutuellement sous la forme d'un cadre rectangulaire et entourant quatre bords périphériques du panneau à cristaux liquides (8),
chacun des cadres supérieur et inférieur (91) étant formé sensiblement en forme de U ayant une partie rectiligne s'étendant parallèlement aux bords supérieur et inférieur du panneau à cristaux liquides (8) et des parties d'extrémité saillantes (91f) faisant saillie vers l'intérieur à un angle droit depuis les deux extrémités de la partie rectiligne, tel que vues de dessus,
chacun des cadres gauche et droit (92) étant formé sensiblement en forme de I ayant une partie rectiligne s'étendant parallèlement aux bords gauche et droit du panneau à cristaux liquides (8), tel que vu de dessus,
**caractérisé en ce que**
les parties d'extrémité saillantes (91f) sont disposées à des positions décalées vers l'extérieur depuis le panneau à cristaux liquides (8) de manière à ne pas se chevaucher avec le panneau à cristaux liquides (8), tel que vu de dessus,
Les deux extrémités de la partie rectiligne de chacun des cadres gauche et droit (92) sont pourvues de parties de réception à gradin (92h) qui reçoivent les parties d'extrémité saillantes (91f) et les parties de réception à gradin (92h) sont disposées à des positions décalées vers l'extérieur par rapport au panneau à cristaux liquides (8), tel que vu de dessus, et
les parties d'extrémité saillantes (91f) chevauchant mutuellement les parties de réception à gradin (92h) telles que vues de dessus, de sorte que les deux faces d'extrémité des cadres gauche et droit (92) à l'exception des parties de réception à gradin (92h) soient adjacentes aux faces latérales internes (91) des cadres supérieur et inférieur (91) et les parties d'extrémité saillantes (91f) sont fixées aux parties de réception à gradin (92h) avec des vis (10).

4. Module à cristaux liquides selon la revendication 3,
dans lequel une partie convexe (91h) est disposée à chacun des coins internes définis entre chacune des parties d'extrémité saillantes (91f) et la partie rectiligne de chacun des cadres supérieur et inférieur (91) et la partie convexe (91h) est disposée à une position décalée vers l'extérieur par rapport au panneau à cristaux liquides (8) tel que vu de dessus, et
une partie concave (92i) qui correspond à la partie convexe (91h) étant disposée à chacune des deux extrémités de la partie rectiligne de chacun des cadres gauche et droit (92) et la partie concave (92i) étant disposée à une position décalée vers l'extérieur du panneau à cristaux liquides (8) tel que vu de dessus.
